# NEUE EUROPÄISCHE PATENTSCHRIFT

(11) **EP 2 059 429 B2**
(45) Veröffentlichungstag und Bekanntmachung des Hinweises auf die Entscheidung über den Einspruch: **24.09.2025**
(45) Hinweis auf die Patenterteilung: 14.11.2018
(21) Anmeldenummer: 07785893.4
(22) Anmeldetag: 04.07.2007
(51) Int. Cl.: B60T 17/04

(54) **VENTILEINHEIT FÜR EINE ELEKTROPNEUMATISCHE BREMSSTEUERUNGSEINRICHTUNG**
VALVE UNIT FOR AN ELECTRO-PNEUMATIC BRAKE CONTROL DEVICE
UNITÉ DE SOUPAPE POUR DISPOSITIF DE COMMANDE DE FREINAGE ÉLECTROPNEUMATIQUE

(30) Priorität: 31.08.2006 DE 102006041011
(43) Veröffentlichungstag der Anmeldung: 20.05.2009
(73) Patentinhaber: ZF CV Systems Hannover GmbH, 30453 Hannover (DE)
(72) Erfinder: BENSCH, Uwe, 30161 Hannover (DE); HELMER, Jörg, 88267 Vogt (DE); KIEL, Bernd-Joachim, 31515 Wunstorf (DE); ROSENDAHL, Hartmut, 30167 Hannover (DE); STRUWE, Otmar, 30163 Hannover (DE)
(74) Vertreter: Wasiljeff, Johannes M.B.
(86) Internationale Anmeldenummer: PCT/EP2007/005911
(87) Internationale Veröffentlichungsnummer: WO 2008/025401

(56) Entgegenhaltungen:
- EP-A1- 1 571 061
- EP-A1- 1 733 943
- EP-A1- 1 785 325
- DE-A1- 10 226 623
- DE-A1- 10 336 611
- DE-A1- 3 523 093
- DE-U- 7 429 240
- GB-A- 2 310 017
- GB-A- 2 349 675
- US-A1- 2003 006 644

## Beschreibung

Die Erfindung betrifft eine elektropneumatische Bremssteuerungseinrichtung zur Steuerung einer Feststellbremse eines Fahrzeugs gemäß dem Oberbegriff des Patentanspruchs 1.

Eine gattungsgemäße Ventileinheit ist aus DE 103 36 611 A1 bekannt. Bei der bekannten Ventileinheit ist ein Feststellbrems-Modul vorgesehen, in welches eine elektronische Steuereinrichtung sowie eine von der elektronischen Steuereinrichtung elektrisch betätigbare Ventileinrichtung integriert sind. Das Feststellbrems-Modul besteht dabei aus einem Elektronikmodul und einem Ventilmodul, in welches wiederum mehrere Ventile baulich integriert sind. Durch diese Ausführung ergibt sich ein kompaktes Feststellbrems-Modul mit einfacher Integrierbarkeit in bekannte Druckluftbremsanlagen. DE 197 04 358 A1 offenbart ein Ventilaggregat mit einen mit einer Druckluftquelle zu verbindenden Eingang und zwei Ausgänge, die bestimmungsgemäß mit dem Stand-Bremskreis bzw. einem Dienst-Bremskreis verbunden sind. Zwischen diesem Eingang und den Ausgängen sind Isolierventile vorgesehen. Ein in die Umgebungsluft entladenes Auslassventil hat einen Eingang, der mit dem ersten Ausgang über eine enge Durchgangsöffnung enthaltende Entlüftungsleitung verbunden ist, und wird vom Druck in dem Dienst-Bremskreis gesteuert. Die Erfindung hat sich die Aufgabe gestellt, derartige Ventileinheiten weiterzuentwickeln und zu verbessern, insbesondere den Installationsaufwand und die Herstellkosten einer Ventileinheit für eine elektropneumatische Bremssteuerungseinrichtung für eine Feststellbremse zu reduzieren.

Die Erfindung löst diese Aufgabe durch die im Patentanspruch 1 angegebenen Merkmale.

Die Erfindung hat den Vorteil, dass durch die Verwendung eines gemeinsamen einheitlichen Ventilblocks für die luftmengenverstärkende Ventileinrichtung sowie das wenigstens eine Steuerventil der Montageaufwand der Ventileinheit sowie der anschließende Aufwand zur Installation der Ventileinheit im Fahrzeug sehr gering gehalten werden kann. Der Ventilblock ist zu diesem Zweck aus einem einheitlichen Metallblock, insbesondere Leichtmetallblock oder Kunststoffblock mit Ausnehmungen für die luftmengenverstärkende Ventileinrichtung und das bzw. die Steuerventile gefertigt. Der Ventilblock bildet ein gemeinsames Gehäuse für sowohl diese Ventileinrichtung als auch das bzw. die Steuerventile. Es sind daher keine separaten Gehäusekomponenten für die Ventileinrichtung und das bzw. die Steuerventile vorhanden. Auf diese Weise können die beweglichen Komponenten der Ventile auf einfach Weise in den Ventilblock eingesetzt werden, wobei der Ventilblock die Funktion von Gehäuseteilen von der Ventileinrichtung bzw. des oder der Steuerventile übernimmt. Beispielsweise bildet der Ventilblock mit den dafür vorgesehenen Ausnehmungen Führungen für die beweglichen Teile der Ventileinrichtung bzw. des/der Steuerventile.

Vorzugsweise weist der Ventilblock einen oder mehrere Einbauplätze für darin anordbare Drucksensoren auf. Vorteilhafterweise ist ein Drucksensor vorgesehen, mittels dessen der Vorratsdruck von einem Druckluftspeicher sensiert werden kann. Der Drucksensor ist dabei derart angeordnet, dass im Falle mehrerer Druckluftspeicher der höhere Vorratsdruck der beiden Druckluftspeicher sensiert werden kann.

Die Ventileinheit steht bevorzugterweise mit einer elektrischen Steuerungseinrichtung in Verbindung, mittels der das wenigstens eine Steuerventil gesteuert betätigbar ist. Diese Steuerungseinrichtung ist mit einer elektrischen Betätigungseinrichtung verbunden, die wenigstens einen elektrischen Schalter mit einer Löseposition und einer Einlegeposition und ggf. einer Neutralposition aufweist, zum Lösen bzw. Einlegen der Feststellbremse. Der mittels des Drucksensors sensierte Vorratsdruck und der bzw. die Schalterzustände werden von der Steuerungseinrichtung eingelesen und ausgewertet und nach entsprechender logischer Verknüpfung werden das bzw. die Steuerventile derart geschaltet, dass die luftmengenverstärkende Ventileinrichtung geschaltet wird, um einen Federspeicherteil eines Federspeicherbremszylinders zu belüften und damit die Feststellbremse des Fahrzeugs zu lösen bzw. um diesen Federspeicherteil zum Einlegen der Feststellbremse zu entlüften. Das bzw. die Steuerventile sind dabei vorzugsweise derart ausgelegt, dass die luftmengenverstärkende Ventileinrichtung im unbestromten Zustand des/der Steuerventile auf eine Entlüftungsposition schaltet, um den Federspeicherteil der Federspeicherbremszylinder zu entlüften und somit die Feststellbremsen einzulegen.

Der bzw. die Drucksensoren sind vorteilhafterweise in einem Deckel der Ventileinheit integriert, der auf den Ventilblock montiert werden kann, um diesen zu verschließen. Vorzugsweise weist der Deckel mehrere Einbauplätze für Drucksensoren auf, wobei entweder alle oder nur ein Teil der Einbauplätze mit Drucksensoren bestückt ist.

Die Steuerungseinrichtung ist vorzugsweise in einer räumlich von der Ventileinheit getrennt angeordneten Einheit zur Steuerung eines Antiblockiersystems integriert. Hierdurch kann die Auswertelogik in eine vielfach bereits vorhandene Steuerungseinrichtung integriert werden, wodurch der Aufwand an Steuerungselektronik gering gehalten werden kann.

Alternativ kann jedoch eine eigene Steuerungseinrichtung für die Ventileinheit vorgesehen sein, die vorteilhafterweise im Deckel der Ventileinheit angeordnet ist.

Bevorzugterweise weist der Ventilblock wenigstens zwei Einbauplätze für Magnetspulen von Steuerventilen auf und zwar auch dann, wenn lediglich eine Magnetspule für die Ventileinheit vorgesehen ist. Dabei ist ein erster Einbauplatz für eine erste Magnetspule eines elektrisch betätigbaren Steuerventils vorgesehen, mittels dessen die Feststellbremse eines Zugfahrzeugs betätigbar ist. Ein zweiter Einbauplatz ist für eine zweite Magnetspule eines weiteren elektrisch betätigbaren Steuerventils vorgesehen, mittels dessen die Feststellbremse eines Anhängerfahrzeugs betätigbar ist. Durch das Bereitstellen von zwei oder mehr als zwei Einbauplätzen kann somit die Ventileinheit sowohl für Fahrzeuge ohne Anhänger als auch für Fahrzeuge mit einem Anhänger verwendet werden. Es kann dank der Bereitstellung mehrerer Einbauplätze für Magnetspulen von Steuerventilen somit ein einheitlicher Ventilblock verwendet werden und zwar unabhängig davon, wie viele Steuerventile tatsächlich in die Ventileinheit eingebaut werden. Der Ventilblock ist somit universell einsetzbar, insbesondere in unterschiedlichen Fahrzeugkonfigurationen und in Märkten mit unterschiedlichen technischen bzw. rechtlichen Vorschriften. Hierdurch können aufgrund höherer Stückzahlen geringere Herstellkosten und auch eine einfachere Lagerhaltung erzielt werden. Sofern nur einer von zwei bzw. nur ein Teil einer Mehrzahl von Einbauplätzen für Magnetspulen bestückt wird, bleibt der zweite Einbauplatz bzw. der andere Teil der Einbauplätze unbestückt.

Vorteilhafterweise weist der Ventilblock einen oder mehrere Anschlüsse auf, die über Druckluftleitungen mit einem oder mehreren Druckluftspeichern verbindbar sind. Üblicherweise erfolgt die Druckluftversorgung für Fahrzeuge, die auf dem europäischen Markt eingesetzt werden über einen eigenen Bremskreis, nämlich den sog. Kreis III, mit einem gesonderten Druckluftvorratsbehälter, während für Fahrzeuge, die auf dem nordamerikanischen Markt verwendet werden, die Druckluftversorgung über die Bremskreise I und II erfolgt, welche für die Betriebsbremse der Hinter- bzw. Vorderachse des Fahrzeugs konzipiert sind. Für den nordamerikanischen Markt werden somit zwei Druckluftversorgungsanschlüsse bereitgestellt und verwendet, während für den europäischen Markt lediglich einer der beiden bereitgestellten Druckluftversorgungsanschlüsse tatsächlich mit einem Druckluftspeicher verbunden wird. Somit bleibt wenigstens einer der mehreren Anschlüsse für Druckluftleitungen zu Druckluftspeichern verschlossen.

Bevorzugterweise ist wenigstens ein Drucksensor in einem im Ventilblock vorgesehenen Druckluftkanal angeordnet, der von dem Ausgang der luftmengenverstärkenden Ventileinrichtung in Richtung des Federspeicherbremszylinders der Feststellbremse führt. Somit kann auch der Druck hinter der luftmengenverstärkenden Ventileinrichtung sensiert und der sensierte Wert in der Steuerungseinrichtung ausgewertet und zur Steuerung der Steuerventile verwendet werden. Dabei weist der Ventilblock mehrere Einbauplätze für Drucksensoren auf und zwar auch dann, wenn eine geringere Anzahl von Sensoren installiert ist, als Einbauplätze vorhanden sind. Somit kann der gleiche Ventilblock für unterschiedliche Fahrzeugkonfigurationen und Märkte verwendet werden.

Weitere vorteilhafte Ausführungsformen ergeben sich aus den Unteransprüchen sowie aus den anhand der beigefügten Zeichnung näher erläuterten Ausführungsbeispielen. In der Zeichnung zeigt:

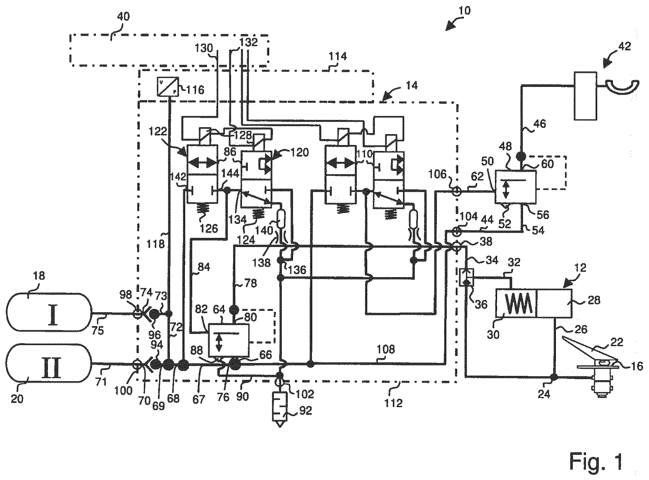

- Fig. 1: einen Ausschnitt einer Druckluftbremsanlage in vereinfachter schematischer Darstellung mit einer elektropneumatischen Bremssteuerungseinrichtung zur Steuerung einer Feststellbremse einschließlich einer Ventileinheit gemäß einem ersten Ausführungsbeispiel der Erfindung;

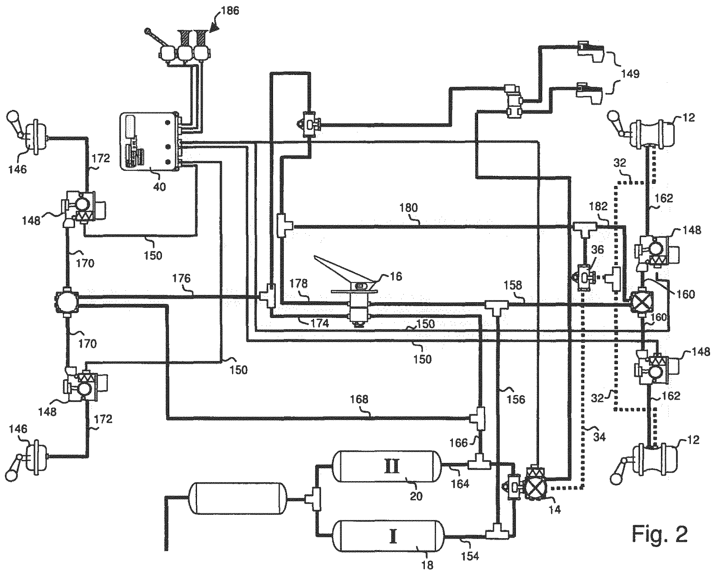

- Fig. 2: eine Druckluftbremsanlage mit den in Fig. 1 gezeigten sowie weiteren Komponenten der Bremsanlage;

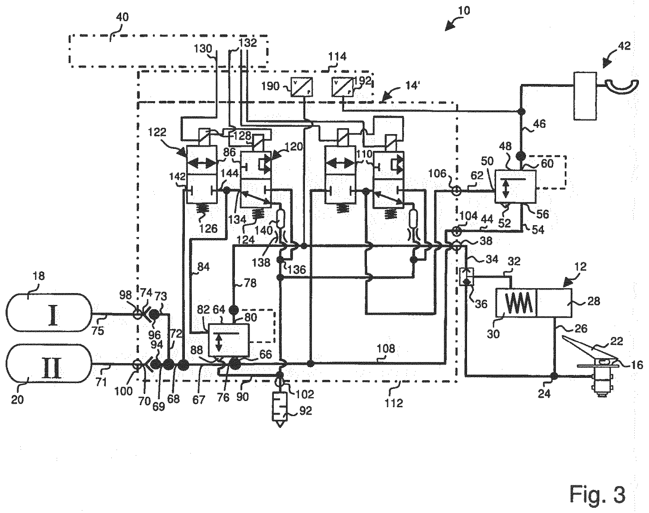

- Fig. 3: einen Ausschnitt einer weiteren Druckluftbremsanlage in vereinfachter schematischer Darstellung mit einer elektropneumatischen Bremssteuerungseinrichtung zur Steuerung einer Feststellbremse einschließlich einer Ventileinheit gemäß einem zweiten Ausführungsbeispiel der Erfindung zur Verwendung in für den nordamerikanischen Markt vorgesehenen Nutzfahrzeugen mit Anhänger und Antiblockiersystem;

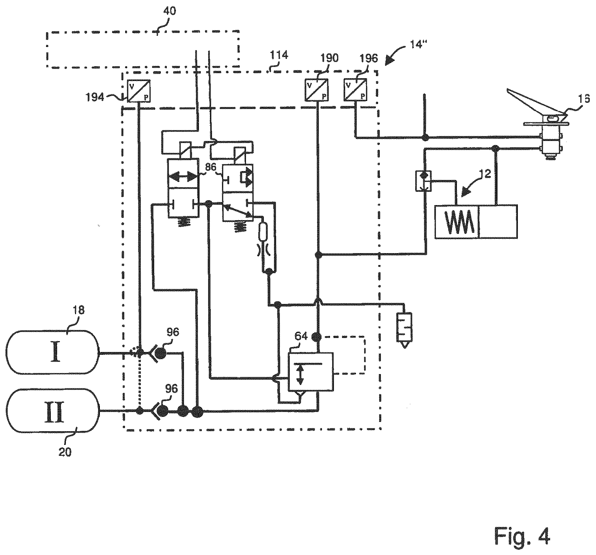

- Fig. 4: einen Ausschnitt einer weiteren Druckluftbremsanlage in vereinfachter schematischer Darstellung mit einer elektropneumatischen Bremssteuerungseinrichtung zur Steuerung einer Feststellbremse einschließlich einer Ventileinheit gemäß einem dritten Ausführungsbeispiel der Erfindung zur Verwendung in für den nordamerikanischen Markt vorgesehenen Nutzfahrzeugen mit Antiblockiersystem;

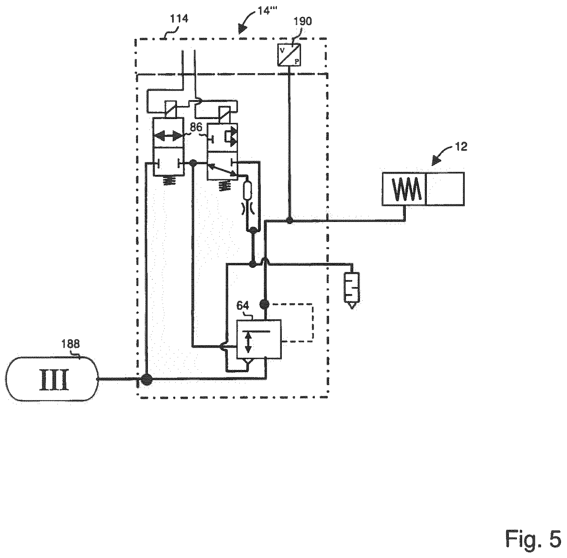

- Fig. 5: einen Ausschnitt einer weiteren Druckluftbremsanlage in vereinfachter schematischer Darstellung mit einer elektropneumatischen Bremssteuerungseinrichtung zur Steuerung einer Feststellbremse einschließlich einer Ventileinheit gemäß einem vierten Ausführungsbeispiel der Erfindung zur Verwendung in für den europäischen Markt vorgesehenen Nutzfahrzeugen mit elektronischem Bremssystem;

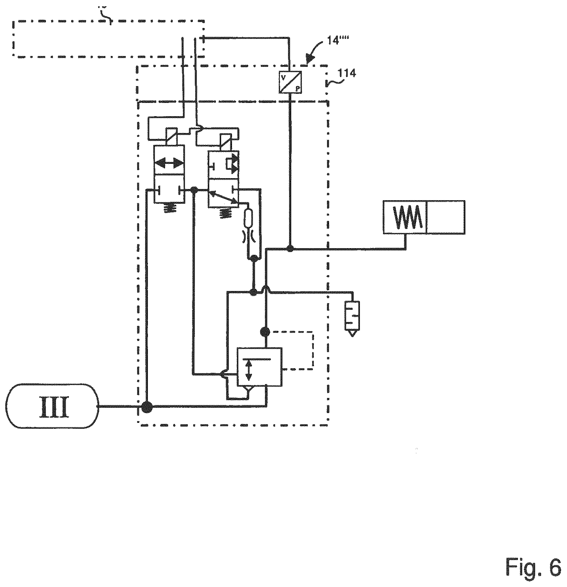

- Fig. 6: einen Ausschnitt einer weiteren Druckluftbremsanlage in vereinfachter schematischer Darstellung mit einer elektropneumatischen Bremssteuerungseinrichtung zur Steuerung einer Feststellbremse einschließlich einer Ventileinheit gemäß einem fünften Ausführungsbeispiel der Erfindung zur Verwendung in für den europäischen Markt vorgesehenen Nutzfahrzeugen mit Antiblockiersystem;

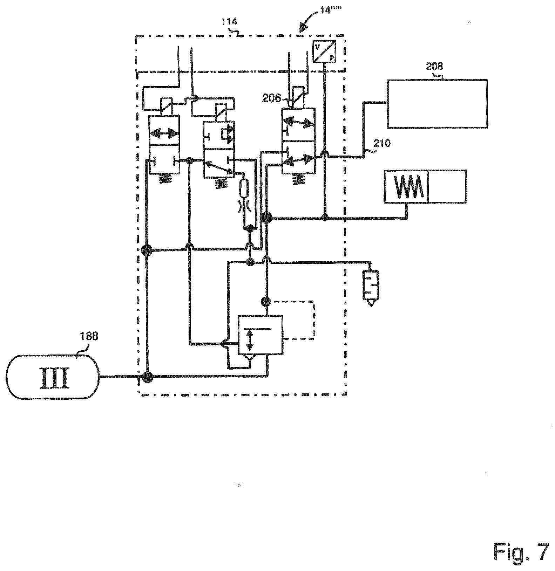

- Fig. 7: einen Ausschnitt einer weiteren Druckluftbremsanlage in vereinfachter schematischer Darstellung mit einer elektropneumatischen Bremssteuerungseinrichtung zur Steuerung einer Feststellbremse einschließlich einer Ventileinheit gemäß einem sechsten Ausführungsbeispiel der Erfindung zur Verwendung in für den europäischen Markt vorgesehenen Nutzfahrzeugen mit Anhänger mit elektronischem Bremssystem und

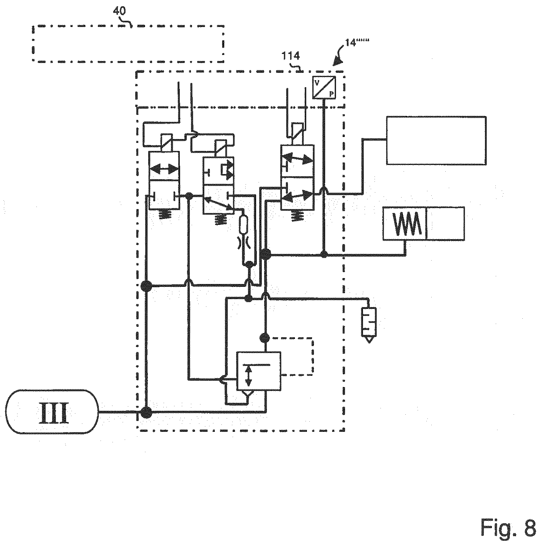

- Fig. 8: einen Ausschnitt einer weiteren Druckluftbremsanlage in vereinfachter schematischer Darstellung mit einer elektropneumatischen Bremssteuerungseinrichtung zur Steuerung einer Feststellbremse einschließlich einer Ventileinheit gemäß einem siebten Ausführungsbeispiel der Erfindung zur Verwendung in für den europäischen Markt vorgesehenen Nutzfahrzeugen mit Anhänger und Antiblockiersystem.

Fig. 1 zeigt schematisch einen Teil einer Druckluftbremsanlage 10 für ein Fahrzeug und zwar insbesondere eine elektropneumatische Bremssteuerungseinrichtung zur Steuerung einer Feststellbremse des Fahrzeugs. Derartige Druckluftbremsanlagen werden beispielsweise bei Nutzfahrzeugen, Lastkraftwagen oder Bussen verwendet. Besondere Anwendung finden derartige Bremsanlagen bei Fahrzeugzügen bestehend aus einem Zugfahrzeug und einem Anhänger.

Fig. 1 zeigt lediglich einige ausgewählte Komponenten der Bremsanlage 10. Die Bremsanlage 10 ist elektrisch steuerbar. Dabei kann die Druckzumessung zu Bremszylindern zur Betätigung von an den Fahrzeugrädern vorgesehenen Radbremsen durch elektrische bzw. elektronische Steuerelemente gesteuert werden. Bei einer ersten Art von Bremsanlagen wird die Betriebsbremse pneumatisch betätigt, wobei allerdings ein elektronisches Antiblockiersystem im Falle des Blockierens eines Rades die zugeordnete Bremse durch Absperren des zugeleiteten Bremsdrucks löst. Derartige Systeme finden sich insbesondere auf dem nordamerikanischen Markt. Bei einer anderen Art von Bremsanlagen wird die Betriebsbremse elektropneumatisch betätigt, indem elektrische Signale von einem Bremspedal in einer Steuerung ausgewertet werden und weitere elektrische Signale mittels elektrisch betätigbarer Ventile die Druckzufuhr zu den Bremszylindern steuern. Derartige Systeme finden sich insbesondere auf dem europäischen Markt.

Die Bremszylinder sind teilweise oder vollständig als kombinierte Betriebs- und Federspeicherbremszylinder 12 (in Fig. 1 ist der Übersichtlichkeit halber lediglich ein derartiger Bremszylinder dargestellt) ausgebildet, wobei der Federspeicherteil von einer als Feststellbremsventileinheit 14 ausgebildeten elektropneumatischen Bremssteuerungseinrichtung zur Steuerung der Feststellbremse gesteuert wird.

Die Bremsanlage 10 weist eine Bremsbetätigungseinrichtung 16 auf, die einen Bremswunsch des Fahrers erfasst. Ein pneumatisch betriebener Abschnitt der Bremsbetätigungseinrichtung 16 wird von einem ersten Druckluftvorratsbehälter 18 (Kreis I) und einem zweiten Druckluftvorratsbehälter 20 (Kreis II) mit Druckluft über (nicht dargestellte) Druckluftleitungen versorgt. Diese Druckluftvorratsbehälter 18, 20 dienen der Druckluftversorgung der Bremszylinder der Betriebsbremse, wie nachfolgend anhand von Fig. 2 näher erläutert wird. Sie dienen aber auch, wie in Fig. 1 veranschaulicht, der Druckluftversorgung der Feststellbremse. Alternativ wird die Druckluft für die Feststellbremse von einem separaten Druckluftvorratsbehälter zugeführt (Kreis III), wie anhand der Fig. 5 bis 8 dargestellt ist. Durch Betätigung eines Bremspedals 22 erzeugt die Bremsbetätigungseinrichtung 16 eine pneumatische Stellgröße, die über eine Druckluftleitung 24, 26 an den kombinierten Betriebs- und Federspeicherbremszylinder 12 weitergeleitet wird. Alternativ oder zusätzlich erzeugt die Bremsbetätigungseinrichtung 16 eine elektrische Stellgröße zur elektrischen Ansteuerung von elektropneumatischen Einrichtungen, um den Druck an den Bremszylindern 12 zu steuern bzw. zu regeln.

Der kombinierte Betriebs- und Federspeicherbremszylinder 12 ist als kombinierter Federspeicher-/Membranzylinder ausgebildet. Er weist neben der Funktion eines Membranzylinders zusätzlich eine Federspeicherfunktion auf. Dieser Bremszylinder 12 weist daher einen Membrananteil 28, welcher pneumatisch mit der Betriebsbremsanlage verbunden sowie mit dem eigentlichen Bremsdruck beaufschlagbar ist, und einen Federspeicherteil 30 auf, welcher pneumatisch von dem Membranteil 28 getrennt und über gesonderte Druckluftleitungen 32, 34 mit Druckluft beaufschlagbar ist. Der Federspeicherteil 30 bildet einen Teil der Feststellbremse. Er beinhaltet die Federspeicherfunktion, welche bei Druckbeaufschlagung des Federspeicherteils 30 eine Speicherfeder vorspannt und dabei eine Bremswirkung der Federspeicherfunktion verhindert bzw. verringert, während sich bei Entlüftung des Federspeicherteils 30 die Speicherfeder entspannt und dabei eine Bremswirkung im Rahmen der Federspeicherfunktion auf die mit dem jeweiligen Bremszylinder verbundene Bremse ausübt. Bremszylinder dieses Typs werden im vorliegenden Zusammenhang als Federspeicherbremszylinder bezeichnet.

Zur Vermeidung einer mechanischen Überbeanspruchung der Bremsmechanik ist ein Überlastschutzventil 36, bspw. ein sogenanntes Select-High-Ventil, als Überlastschutz vorgesehen, das zwischen den Federspeicherteil 30, einen pneumatischen Ausgang 38 der Feststellbremsventileinheit 14 und der Bremsbetätigungseinrichtung 16 geschaltet ist. Das Überlastschutzventil 36 wählt den höheren der beiden an seinen zur Bremsbetätigungseinrichtung 16 bzw. zum Ausgang 38 der Feststellbremsventileinheit 14 führenden Eingängen anliegenden Drücke aus und führt diesen über seinen Ausgang dem Federspeicherteil 30 des Bremszylinders 12 zu. Das Überlastschutzventil 36 verhindert eine Addition der von der Betriebsbremse ausgeübten Bremskraft und der von der Feststellbremse ausgeübten Bremskraft, um auf diese Weise eine mechanische Überbeanspruchung der Bremsmechanik in der diesem Bremszylinder 12 zugeordneten Radbremse zu vermeiden.

Mittels des Federspeicherbremszylinders 12 wird eine Feststellbremsfunktion realisiert, die auch bei Fehlen von Druckluft eine Bremsung bzw. ein Feststellen des Fahrzeugs ermöglicht. Die Feststellbremsfunktion ist aktiv, wenn der jeweilige Federspeicherteil 30 eines Federspeicherbremszylinders 12 unterhalb eines Mindestdruckwertes oder vollständig entlüftet wird. Der Federspeicherteil 30 des Bremszylinders 12 ist über die Druckluftleitungen 32, 34 mit der Feststellbremsventileinheit 14 pneumatisch verbunden, welche eine Drucksteuerung mit Hilfe elektronischer Steuerungsmittel erlaubt.

Ein manuell betätigbarer Feststellbremssignalgeber (in Fig. 1 nicht dargestellt) ist über eine (nicht dargestellte) elektrische Leitung mit einer elektrischen Steuereinheit 40 elektrisch verbunden.

Das Fahrzeug ist zur Ankopplung eines Anhängers ausgebildet, der eine weitere mit Federspeicherbremszylindern ausgestaltete Feststellbremse aufweist. Die Bremsanlage 10 weist daher ein sog. Zugwagenschutzventil 42 auf, welches zur Bremsdrucksteuerung, insbesondere der Feststellbremse des Anhängers dient. Das Zugwagenschutzventil 42 wird über Druckluftleitungen 44, 46 mit dem Vorratsdruck der Druckluftvorratsbehälter 18, 20 versorgt. Ferner wird dem Zugwagenschutzventil 42 ein mittels einer luftmengenverstärkenden Ventileinrichtung, nämlich eines Relaisventils 48, ausgesteuerter Druck für die Feststellbremse des Anhängers bereitgestellt.

Das Relaisventil 48 weist einen Steuereingang 50, einen mittelbar oder unmittelbar mit der Atmosphäre verbundenen Entlüftungsanschluss 52 sowie einen über eine Druckluftleitung 54 mit dem Vorratsdruck der Druckluftvorratsbehälter 18, 20 verbindbaren Einlass 56 sowie einen über die Druckluftleitung 46 mit dem Zugwagenschutzventil 42 verbindbaren Auslass 60 auf. Der Steuereingang 50 ist über eine Druckluftleitung 62 mit der Feststellbremsventileinheit 14 verbunden.

Das Relaisventil 48 gibt an seinem Auslass 60 einen Ausgangsdruck in die Druckluftleitung 46 ab, der dem über die Druckluftleitung 62 an den Steuereingang 50 und somit dem in eine Steuerkammer des Relaisventils 48 eingesteuerten Druck entspricht. Das Relaisventil 48 entnimmt dabei die hierfür benötigte Druckluft aus der mit dem Einlass 56 des Relaisventils 48 verbundenen Druckluftleitung 54, die über weitere Druckluftleitungen mit den Druckluftvorratsbehältern 18, 20 verbunden ist.

Die Feststellbremsventileinheit 14 weist eine luftmengenverstärkende Ventileinrichtung in Form eines Relaisventils 64 für das Zugfahrzeug auf. Das Relaisventil 64 umfasst einen unmittelbar oder mittelbar über Druckluftleitungen 66 bis 75 mit den Druckluftvorratsbehältern 18, 20 verbundenen Einlass 76. Ferner weist das Relaisventil 64 einen über Druckluftleitungen 78, 34, 32 mit dem Federspeicherteil 30 des Bremszylinders 12 verbundenen Auslass 80 auf. Ferner weist das Relaisventil 64 einen Steuereingang 82 auf, der über eine Druckluftleitung 84 mit einem Steuerventil 86 zur Steuerung der Feststellbremse des Zugfahrzeuges verbunden ist.

Das Relaisventil 64 gibt an seinem Auslass 80 einen Ausgangsdruck in die Druckluftleitung 78 ab, der dem über die Druckluftleitung 64 an den Steuereingang 82 und somit einem in eine Steuerkammer des Relaisventils 64 eingesteuerten Druck entspricht. Das Relaisventil 64 entnimmt dabei die hierfür benötigte Druckluft aus der mit dem Einlass 76 des Relaisventils 64 verbundenen Druckluftzufuhrleitung 66. Eine etwaig notwendige Entlüftung der Druckluftleitung 78 erfolgt über einen mittelbar oder unmittelbar mit der Atmosphäre verbundenen Entlüftungsanschluss 88. Im in Fig. 1 gezeigten Ausführungsbeispiel ist dieser Entlüftungsanschluss 88 über eine Druckluftleitung 90 mit einer Entlüftungseinrichtung 92 verbunden.

Die Feststellbremsventileinheit 14 weist ferner jeweils vor die Druckluftvorratsbehälter 18, 20 geschaltete Rückschlagventile 94. 96 auf welche verhindern, dass im Falle eines Druckabfalls oder eines Abreißens oder einer Beschädigung der Druckluftleitungen 71 bzw. 75 zum Druckluftvorratsbehälter 20 bzw. 18 ein Druckverlust in der Feststellbremsventileinheit 14 auftritt. Ein derartiger ungewollter Druckabfall bzw. Druckverlust ist nämlich unerwünscht, da er zu einem schlagartigen Einlegen der Feststellbremse und somit zu einer Notbremsung des Zugfahrzeugs führen würde. Dies kann unter Umständen eine unkontrollierbare Fahrsituation auslösen. Ferner würde bei Ausfall eines Bremskreises auch der andere Bremskreis mit entlüftet werden. Dies ist jedoch gefährlich und daher unerwünscht.

Die Feststellbremsventileinheit 14 weist mehrere pneumatische Anschlüsse 98, 100, 102, 104, 106 auf. Über den Anschluss 98 wird die Druckluftleitung 74 mit der Druckluftleitung 75 zum Anschluss des ersten Druckluftvorratsbehälters 18 verbunden. Über den Anschluss 100 wird die Druckluftleitung 70 mit der Druckluftleitung 71 zum Anschluss des zweiten Druckluftvorratsbehälters 20 verbunden. Über den Anschluss 102 wird die Druckluftleitung 90 mit der Entlüftungseinrichtung 92 verbunden. Über den Anschluss 104 wird die Druckluftleitung 44 zum Relaisventil 48 für die Anhängersteuerung mit der Druckluftleitung 108 und somit über die Druckluftleitungen 67-75 mit den Druckluftvorratsbehältern 18, 20 verbunden. Über den Anschluss 106 erfolgt eine Verbindung der Druckluftleitung 62 zum Steuereingang 50 des Relaisventils 48 für die Anhängersteuerung mit einem in der Feststellbremsventileinheit 14 angeordneten Steuerventil 110 zur Steuerung der Anhängerfeststellbremse.

Die Feststellbremsventileinheit 14 umfasst einen Ventilblock 112 und einen Deckel 114 für diesen Ventilblock 112. In dem Ventilblock 112 sind insbesondere die vorstehend erläuterten Steuerventile 86, 110 sowie das Relaisventil 64 sowie die diversen innerhalb dieses Ventilblocks 112 eingezeichneten Druckluftleitungen in Form von Druckluftkanälen integriert. Insbesondere sind die Druckluftkanäle in Form von Bohrungen bzw. Ausnehmungen in dem Ventilblock 112 ausgebildet. Der Begriff "Druckluftleitung" umfasst im Zusammenhang mit der vorliegenden Erfindung jedwede Einrichtung zur Führung bzw. Leitung von Druckluft.

Der Ventilblock 112 bildet ein gemeinsames einteiliges integrales Gehäuse für die Steuerventile 86, 110 und das Relaisventil 64, so dass lediglich noch die üblicherweise bei derartigen Ventilen innen liegenden Teile in den Ventilblock 112 einzusetzen sind. In dem Ventilblock 112 sind daher bereits mehrere Plätze für derartige Steuerventile 86, 110 bzw. Relaisventile 64 vorgesehen, die je nach Konfiguration der Feststellbremsventileinheit 14 bestückt bzw. freigelassen werden.

Die Feststellbremsventileinheit 14 weist ferner einen innerhalb des Deckels 114 untergebrachten Drucksensor 116 auf, der zur Überwachung des Vorratsdrucks innerhalb der Feststellbremsventileinheit 14 dient. Der Drucksensor 116 ist zu diesem Zweck über eine Druckluftleitung 118 bzw. einen entsprechenden Druckluftkanal mit der Druckluftleitung 72 und somit mit den Druckluftleitungen 66-71, 73-75 sowie 108, 44 und 46 unmittelbar oder mittelbar verbunden. Mittels dieses Drucksensors 116 kann zumindest der höhere der beiden Vorratsdrücke der Druckluftvorratsbehälter 18, 20 sensiert werden. Bei einer alternativen Ausgestaltung sind mehrere Drucksensoren derart angeordnet, dass jeder der beiden Vorratsdrücke der Druckluftvorratsbehälter 18, 20 separat sensiert werden kann. Die Ventileinheit 14 weist daher alternativ mehrere Druckluftleitungen bzw. Druckluftkanäle zu mehreren Drucksensorplätzen auf, die entweder vollständig oder teilweise mit Drucksensoren bestückt sind.

In dem in Fig. 1 dargestellten Ausführungsbeispiel ist die elektrische Steuereinheit 40 außerhalb der Feststellbremsventileinheit 14 in einer separaten Steuereinheit angeordnet. Hierbei kann es sich um die Steuereinheit eines Antiblockiersystems handeln. Alternativ kann die Steuereinheit 40 jedoch auch innerhalb der Feststellbremsventileinheit 14, insbesondere im Deckel 114 angeordnet sein. Die Feststellbremsventileinheit weist hierzu eine Ausnehmung zur Aufnahme der Steuereinheit 40 im Ventilblock und/oder Deckel auf. Entsprechende Ausführungsbeispiele sind in den Fig. 5 und 7 dargestellt.

Mittels dieser elektrischen Steuereinheit 40 werden die Steuerventile in Abhängigkeit der Signale der Betätigungseinrichtung und ggf. der Drucksensoren ermittelt und den Steuerventilen 86, 110 zugeführt, welche dann die entsprechenden Ventilstellungen einnehmen.

Die Steuerventile 86 bzw. 110 sind baugleich ausgeführt. Nachfolgend beschränken wir uns daher auf die Erläuterung des Steuerventils 86, wobei die diesbezüglichen Ausführungen entsprechend für das Steuerventil 110 gelten.

Die Steuerventile 86 und 110 sind als in dem Ventilblock 112 integrierte Bauteile ausgeführt. D.h., dass die Gehäuse der Steuerventile 86, 110 von dem Ventilblock 112 gebildet werden. Ebenso ist das Relaisventil 64 in dem Ventilblock 112 integriert ausgebildet. D.h., dass das Gehäuse des Relaisventils 64 durch den Ventilblock 112 gebildet wird. Das Steuerventil 86 ist vorzugsweise als Doppelankermagnetventil ausgebildet. Dieses Doppelankermagnetventil weist zwei in einer von dem Ventilblock 112 gebildeten Ankerführungsanordnung angeordnete Magnetanker 120, 122 auf. Ein erster Magnetanker, nämlich der Primäranker 120, ist mittels einer Feder 124 belastet und wird durch diese Feder in die in Fig. 1 dargestellte Stellung gedrückt. In entsprechender Weise ist ein zweiter Magnetanker, nämlich der Sekundäranker 122, mit einer Feder 126 belastet und wird in die in Fig. 1 gezeigte Stellung gedrückt. Beide Magnetanker 120, 122 werden teilweise von einer Magnetspule 128 umgeben. In Fig. 1 ist die Magnetspule 128 zweiteilig dargestellt. Es handelt sich jedoch um eine einzige Spule, mittels der sowohl der Primäranker 120 als auch der Sekundäranker 122 betätigt werden können. Bei Einspeisung geeigneter Magnetströme in die Magnetspule 128 zieht die Magnetspule 128 zunächst den Primäranker 120 und bei einem höheren Magnetstrom ggf. den Sekundäranker 122 in Richtung des Spuleninneren. Auf diese Weise kann der Primäranker 120 und ggf. zusätzlich der Sekundäranker 122 in seine Schaltstellung gebracht werden. Der Primäranker 120 ist als Schaltelement für ein Entlüftungsventil und der Sekundäranker 122 als Schaltelement für ein Belüftungsventil vorgesehen. Die Magnetspule 128 weist zwei elektrische Anschlüsse 130, 132 auf, die mit der elektrischen Steuereinheit 40 verbunden sind.

Bei stromloser Magnetspule 128 befinden sich sowohl der Primäranker 120 als auch der Sekundäranker 122 in ihren durch die Federn 124, 126 bestimmten, in Fig. 1 dargestellten Grundstellungen. Das Belüftungsventil sperrt in seiner Grundstellung den Vorratsdruck aus dem Druckluftvorratsbehälter 18 bzw. 20 gegen den Steuereingang 82 des Relaisventils 64 ab. Das Entlüftungsventil verbindet in seiner Grundstellung seinen Einlass 134 mit seinem Auslass 136 unter Zwischenschaltung einer als Drossel wirkenden Blende 138. Zwischen der Blende 138 und dem Primäranker 120 ist ein Druckluftspeicher 140 vorgesehen. Dieser Druckluftspeicher 140 ist vorzugsweise als eine Kammer innerhalb des Steuerventils 86 ausgebildet.

Der Einlass 134 des Entlüftungsventils ist mit dem Auslass des Belüftungsventils sowie dem Steuereingang 82 des Relaisventils 64 verbunden.

In der Grundstellung des Primärankers 120 ist dieser Einlass 134 pneumatisch mit dem Auslass 136 über die Blende 138 verbunden. In der Schaltstellung des Primärankers 120, bspw. wenn der Primäranker durch Einspeisung eines ersten Magnetstroms einer vorbestimmten Höhe in Richtung des Inneren der Magnetspule 128 hineingezogen ist, ist der Druckluftspeicher 140 direkt, d.h. ohne Zwischenschaltung der Blende 138, mit dem Auslass 136 pneumatisch verbunden und der Einlass 134 vom Auslass 136 angesperrt.

Das Belüftungsventil 122 weist einen mit dem Vorratsdruck der Vorratsbehälter 18 bzw. 20 verbindbaren Einlass 142 auf. Der Auslass des Belüftungsventils 144 ist ferner mit dem Einlass 134 des Entlüftungsventils über entsprechende Kanäle des Steuerventils 86 pneumatisch verbunden.

Der Sekundäranker 122 des Belüftungsventils sperrt in seiner Grundstellung den Einlass 142 vom Auslass 144 des Belüftungsventils ab. In seiner Schaltstellung verbindet der Sekundäranker 122 den Einlass 142 mit dem Auslass 144. Aufgrund der beschriebenen Anordnung bildet das Entlüftungsventil ein 3/2-Wege-Magnetventil. Das Belüftungsventil bildet dagegen ein 2/2-Wege-Magnetventil.

Aufgrund der beschriebenen Ausbildung des Steuerventils 86 als Doppelankerventil mit einer Blende für langsames Entlüften wird eine Ventileinheit bereitgestellt, die im Aufbau einfach und daher kostengünstig ausgestaltet ist und zugleich ein sicheres Abstellen des Fahrzeugs selbst bei einem Ausfall der elektrischen Energieversorgung gewährleistet. Durch Einspeisung eines hohen Magnetstroms kann das Relaisventil und somit der Federspeicherteil der Federspeicherbremszylinder belüftet werden. Durch Einspeisung eines niedrigen Stroms kann der Druck am Steuereingang des Relaisventils und somit auch im Federspeicherteil des Federspeicherbremszylinders gehalten werden. Im Falle eines getakteten niedrigen Stroms am Steuerventil 86 erfolgt ein entsprechend dem Takt in seiner Geschwindigkeit einstellbares Hin- und Herstellen des Primärankers 120, wodurch eine schnelle Entlüftung des Steuereingangs 82 des Relaisventils 64 und damit des Federspeicherteils der Federspeicherbremszylinder ermöglicht wird. Im unbestromten Zustand erfolgt hingegen nur eine langsame Entlüftung des Steuereingangs 82 bzw. des Steuerraums des Relaisventils 64 über die Blende 138.

Somit wird eine einfache Realisierung einer Feststellbremse, die einen sicheren Zustand auch bei Ausfall der elektrischen Energieversorgung gewährleistet und zudem auf rein elektrischem Wege betätigt werden kann, ermöglicht. Insbesondere kann die oftmals bisher übliche pneumatische Verrohrung im Fahrerhaus des Fahrzeugs zur Aktivierung der Feststellbremse entfallen und vollständig eine Bedienung der Feststellbremse über ein elektrisches Betätigungsorgan erreicht werden. Dies gilt sowohl für die Feststellbremse des Zugfahrzeuges als auch für die Feststellbremse des Anhängers.

Statt der erläuterten Anordnung für das Steuerventil 86 kann auch alternativ eine andere Ventilanordnung verwendet werden, welche es ermöglicht, den Steuereingang 82 des Relaisventils 64 zu belüften, zu entlüften bzw. den Druck am Steuereingang 82 des Relaisventils 64 zu halten. Vorteilhafterweise, jedoch nicht notwendigerweise ist dabei eine langsame Entlüftung des Steuereingangs 82 vorgesehen, insbesondere im Falle eines Ausfalls der elektrischen Energieversorgung.

Wie bereits oben ausgeführt, ist das Steuerventil 110 für die Steuerung der Feststellbremse des Anhängers in entsprechender Weise wie das Steuerventil 86 ausgebildet. Die Feststellbremsventileinheit 14 weist zu diesem Zweck entsprechende Einbauplätze für diese Ventile auf, welche bei Bedarf bestückt werden. Insgesamt ermöglicht die Integration aller Bauteile in einem gemeinsamen Ventilblock eine Vereinfachung des Gesamtaufbaus, da die einzelnen Ventilgehäuse entfallen können und der gemeinsame Ventilblock 112 ein integrales Gehäuse und eine Aufnahme- bzw. Lagereinrichtung für die Ventilkomponenten bildet.

Fig. 2 zeigt das in Fig. 1 dargestellte Teilsystem der Bremsanlage im größeren Zusammenhang und zwar für ein vierrädriges Fahrzeug. Dieses Fahrzeug weist vier Räder auf, welche mittels Druckluftbremszylindern 12, 146 individuell abbremsbar sind. Die Bremszylinder 12 sind für die Hinterachse und die Bremszylinder 146 für die Vorderachse vorgesehen. Die Bremszylinder 12 sind - wie im Zusammenhang mit Fig. 1 erläutert - als kombinierte Betriebsbrems-/Federspeicherbremszylinder ausgebildet, um sowohl eine Bremsung mittels der Betriebsbremse als auch ein Bremsen mittels der Feststellbremse zu ermöglichen. Den Bremszylindern 12, 146 sind jeweils elektromagnetisch betätigbare Ventile 148 vorgeschaltet, mittels denen ein Antiblockiersystem geschaffen wird, die im Falle eines Blockierens des entsprechenden Rades den zugeführten Bremsdruck verringern. Diese Ventile 148 sind über elektrische Leitungen 150 mit der Steuereinheit 40 verbunden. Ferner sind die Ventile über pneumatische Leitungen mit den Druckluftspeichern 18, 20 verbunden. Dabei sind die Ventile 148 der Hinterachse über Druckluftleitungen 154, 156, 158, 160 mit dem Druckluftvorratsbehälter 18 verbunden und bilden den sog. Kreis I. In entsprechender Weise sind die Ventile 148 der Vorderachse über Druckluftleitungen 164, 166, 168, 170, 172 mit dem zweiten Druckluftvorratsbehälter verbunden und bilden den sog. Kreis II.

Die Bremsbetätigungseinrichtung 16 ist mit pneumatischen Leitungen, nämlich Druckluftleitungen 174, 176 und dann weiter über die Druckluftleitungen 170, 172 mit den Druckluftbremszylindern 146 der Vorderachse verbunden, um den pneumatisch arbeitenden Bremskreis II der Betriebsbremse zu vervollständigen. In entsprechender Weise ist die Bremsbetätigungseinrichtung 16 über Druckluftleitungen 178, 180, 182 und dann weiter über die Druckluftleitungen 160, 162 mit den kombinierten Betriebs- und Federspeicherbremszylinder 12 verbunden, um den pneumatisch arbeitenden Bremskreis I der Betriebsbremse zu vervollständigen.

Die in Fig. 1 dargestellte Feststellbremsventileinheit 14 ist in Fig. 2 als integriertes Bauteil veranschaulicht. Diese Feststellbremsventileinheit 14 steht über die bereits im Zusammenhang mit Fig. 1 erläuterte Druckluftleitung 34 mit dem als Überlastschutz dienendem Überlastschutzventil 36 in Verbindung. Dieser Überlastschutz verhindert eine Überlastung der kombinierten Betriebs- und Federspeicherbremszylinder 12 bei einer gleichzeitigen Beanspruchung mittels der Kraft der Speicherfeder und ggf. dem zusätzlichen Betriebsbremsdruck. Der Überlastschutz 36 steht über Druckluftleitungen 32 mit den Federspeicherbremszylindern 12 pneumatisch in Verbindung.

Ferner ist in Fig. 2 ein Druckluftanschluss 149 für die Betätigung der Betriebsbremse bzw. der Feststellbremse eines etwaigen Anhängers vorgesehen.

Ferner zeigt Fig. 2 eine elektrische Betätigungseinrichtung 186 zur Betätigung der Feststellbremse. Diese Betätigungseinrichtung weist je nach Fahrzeugkonfiguration ein oder zwei elektrische Schalter mit Löse-, Einlege- und Neutralposition auf zum Lösen bzw. Einlegen der Feststellbremse. Ferner ist bei einer besonderen Ausführungsform für Fahrzeuge mit Anhängern ein zusätzliches elektrisches Bedienelement vorgesehen, um den Anhänger separat mittels der Feststellbremse einbremsen zu können. Mittels dieses zusätzlichen Bedienelements kann eine Streckbremsfunktion realisiert werden. Durch Betätigen der Streckbremsfunktion kann der Fahrer bei glatter Fahrbahn den Zug beim Bremsen gestreckt halten, indem nur die hinteren Räder, also die des Anhängers/Aufliegers, eingebremst werden. Der Fahrer kann mittels des zusätzlichen Bedienelements auch testen, ob ein stehender Anhänger tatsächlich eingebremst ist, indem er dieses Bedienelement betätigt und mittels des Zugfahrzeuges eine Zugkraft auf den Anhänger ausübt. Ferner kann der Fahrer mittels der Streckbremse ein sicheres Verschließen der Verbindung zwischen Zugfahrzeug und Anhänger, insbesondere Auflieger, bzw. die Sattelkupplung kontrollieren.

In dem in Fig. 2 dargestellten Ausführungsbeispiel ist die Steuerung der elektropneumatischen Feststellbremse in der Steuerungseinheit eines Antiblockiersystems integriert. Der in der Feststellbremsventileinheit 14 vorgesehene Drucksensor 116 sensiert vorzugsweise den höheren der beiden Vorratsdrücke der Druckluftvorratsbehälter 18, 20. Der sensierte Druckwert sowie die Schalterzustände der elektrischen Betätigungseinrichtung 186 werden von der Steuereinheit 40 eingelesen und ausgewertet. Je nach Ergebnis der entsprechenden logischen Verknüpfungen werden die Steuerventile 86, 110 entsprechend geschaltet. Wenn die Steuerventile bestromt werden, können die Relaisventile 64 bzw. 48 in ihre Schaltstellung versetzt werden, was dazu führt, dass die Federspeicher belüftet werden, so dass die Feststellbremse gelöst wird. Wenn jedoch die Steuerventile stromlos geschaltet sind, schaltet das Relaisventil 64 bzw. 48 auf Entlüften und die Federspeicher werden eingelegt, d.h. die Federspeicherbremszylinder legen die Feststellbremse ein.

Die oben erläuterte Ventileinheit 14 umfasst ein Relaisventil 64 für das Zugfahrzeug, ein Steuerventil 86 für das Zugfahrzeug sowie bei Bedarf auch ein Steuerventil 110 für einen Anhänger. Das Relaisventil 64 und das dazugehörende Steuerventil 86 des Zugfahrzeugs sind in dem Ventilblock 112 integriert. Ebenso ist ein Drucksensor im Deckel 114 der Ventileinheit 14 integriert. Das zweite Relaisventil 48 für den Anhänger kann optional extern installiert werden. Das Überlastschutzventil 36 ist in der Ventileinheit oder extern angebracht.

Die Fig. 3 bis 8 zeigen weitere Ausführungsbeispiele von Feststellbremsventileinheiten in unterschiedlichen Konfigurationen für unterschiedliche Märkte. Ebenso wie die in den Fig. 1 und 2 gezeigten Ausführungsbeispiele betreffen die Fig. 3 und 4 Bremssysteme für den nordamerikanischen Markt. Diese zeichnen sich dadurch aus, dass die Feststellbremsventileinheit mit Druckluft aus den Druckluftvorratsbehältern der Bremskreise I und II, d.h. den Betriebsbremskreisen für die Hinterachse und die Vorderachse mit Druckluft versorgt wird. Demgegenüber verfügen die Ausführungsbeispiele gemäß den Fig. 5 bis 8 über eine eigene Druckluftversorgung für die Feststellbremse und somit über einen eigenen Bremskreis für die Feststellbremse, nämlich den Kreis III.

Die Fig. 3 bis 8 stimmen weitgehend mit Fig. 1 überein. Nachfolgend werden daher lediglich die Unterschiede gegenüber Fig. 1 erläutert und im Übrigen auf die vorstehenden Erläuterungen verwiesen.

Die in Fig. 3 gezeigte Feststellbremsventileinheit 14' weist anstelle eines Drucksensors 116, welcher den Vorratsdruck bzw. die Vorratsdrücke misst, zwei Drucksensoren 190, 192 auf. Der Drucksensor 190 misst den ausgesteuerten Druck am Ausgang des Relaisventils 64. Der Drucksensor 192 misst den ausgesteuerten Druck am Ausgang des Relaisventils 48. Die Drucksensoren 190 und 192 sind im Deckel 114 der Feststellbremsventileinheit 14' angeordnet. Der Deckel 14' weist entsprechende Einbauplätze für diese Drucksensoren auf.

Für eine universelle Verwendbarkeit der Feststellbremsventileinheit weist der Deckel 114 mehrere Einbauplätze für Drucksensoren auf. Diese Einbauplätze können bei Bedarf mit Drucksensoren 116, 190, 192 bestückt werden. Je nach Bestückung dieser Einbauplätze mit den Drucksensoren kann der Vorratsdruck der Druckluftvorratsbehälter 18, 20 entweder einzeln, der höhere der beiden Vorratsdrücke hinter den Rückschlagventilen 94, 96 und/oder der jeweilige Druck hinter dem bzw. den Relaisventilen 48, 64 gemessen werden. Vorzugsweise weist der Deckel 114 daher drei oder vier derartige Einbauplätze für Drucksensoren auf.

Die Drucksensoren 190, 192 sind ebenso wie der Drucksensor 116 mit der elektrischen Steuereinheit 40 verbindbar, so dass die sensierten Druckwerte in die Auswertung einbezogen werden können.

Fig. 4 zeigt eine Feststellbremsventileinheit 14" mit lediglich einem Steuerventil 86 zur Steuerung des Relaisventils 64. Diese Konfiguration kommt zum Einsatz bei Fahrzeugen ohne Anhänger, bspw. bei Bussen. Gegenüber den Fig. 1 und 3 fehlt daher das zweite Relaisventil 48 und somit auch das Steuerventil 110 zur Steuerung des Relaisventils 48. Wiederum sind mehreren Drucksensoren vorgesehen. Der Drucksensor 190 misst wiederum den ausgesteuerten Druck am Ausgang des Relaisventils 64. Der Drucksensor 194 misst den Vorratsdruck des Druckluftvorratsbehälters 18 und zwar noch vor dem Rückschlagventil 96. Der Drucksensor 194 kann alternativ jedoch auch mit der Druckleitung zum Druckluftvorratsbehälter 20 in Verbindung stehen, so wie dies durch eine gestrichelte Linie in Fig. 4 dargestellt ist.

Ferner ist ein weiterer Drucksensor 196 vorgesehen, der ebenfalls im Deckel 114 angeordnet ist. Mittels dieses Drucksensors 196 wird ein vom Bremswertgeber 16 abgegebener Druck bestimmt.

Alle mit den vorstehenden Drucksensoren ermittelten Drücke werden in der Auswerteeinheit 40 ausgewertet, um insbesondere das Steuerventil 86 zur Steuerung des Relaisventils 64 und somit der Federspeicherbremszylinder 12 zu steuern.

Fig. 5 zeigt ein Ausführungsbeispiel einer Feststellbremsventileinheit 14"'. Diese Konfiguration kommt zum Einsatz bei Fahrzeugen für den europäischen Markt, bei denen ein separater Druckluftvorratsbehälter 188 für den Feststellbremskreis III vorgesehen ist. Diese Konfiguration kommt - entsprechend dem Ausführungsbeispiel von Fig. 4 - bei Fahrzeugen ohne Anhänger zum Einsatz, wie z.B. bei Bussen. Diese Konfiguration entspricht daher weitgehend auch der Konfiguration des in Fig. 4 gezeigten Ausführungsbeispiels, wobei jedoch, wie bereits ausgeführt, ein besonderer Druckluftvorratsbehälter 188 für die Feststellbremse vorgesehen ist. Bei dem in Fig. 5 gezeigten Ausführungsbeispiel ist der Deckel 114 lediglich mit einem einzigen Drucksensor 190 bestückt, welcher den ausgesteuerten Druck am Ausgang des Relaisventils 64 sensiert. In dem in Fig. 5 gezeigten Ausführungsbeispiel ist ferner die elektronische Steuereinheit im Deckel 114 angeordnet. Der Deckel 114 weist zu diesem Zweck einen Einbauplatz für diese Steuereinheit auf.

Bei einer nicht dargestellten alternativen Ausführungsform kann ferner mit einem weiteren Drucksensor der Vorratsdruck des Druckluftvorratsbehälters 188 sensiert werden. Alle gemessenen Druckwerte werden von der Auswerteelektronik zur Steuerung des Steuerventils 86 herangezogen.

Fig. 6 zeigt ein weiteres Ausführungsbeispiel einer Feststellbremsventileinheit 14'"', welche der in Fig. 5 gezeigten Feststellbremsventileinheit 14'" weitgehend entspricht. Der einzige Unterschied besteht jedoch darin, dass bei der in Fig. 6 gezeigten Ventileinheit 14"" die elektronische Steuereinheit 40 außerhalb des Deckels 114 angeordnet ist und somit bspw. in der Elektronik des Antiblockiersystems des Fahrzeugs integriert ist.

Fig. 7 zeigt ein weiteres Ausführungsbeispiel einer Feststellbremsventileinheit 14""'. Dieses Ausführungsbeispiel entspricht weitgehend dem in Fig. 5 gezeigten Ausführungsbeispiel, wobei jedoch nunmehr die Rohrbruchsicherung mit Kreis IV nicht dargestellt ist. Zusätzlich zu dem in Fig. 5 gezeigten Ausführungsbeispiel weist jedoch die Feststellbremsventileinheit 14""' ein weiteres Steuerventil 206 für eine Anhängerkontrollsteuerung auf. Mittels dieses Ventils 206 kann eine sog. Anhängerkontroll-Funktion aktiviert werden. Als Anhängerkontroll-Funktion wird ein Zustand der Bremsanlage bezeichnet, bei dem bei an sich eingelegter Feststellbrems-Funktion die Bremsen eines mit dem Zugfahrzeug verbundenen Anhängers gelöst werden, um dem Fahrer des Zugfahrzeuges eine Möglichkeit zu geben, zu überprüfen, ob bei abgestelltem Fahrzeug die Bremswirkung der Feststellbremse des Zugfahrzeuges alleine ausreicht, um den gesamten Fahrzeugzug am Wegrollen zu hindern. Eine derartige Überprüfung ist insbesondere bei Anhängern vorteilhaft, bei denen etwa infolge von schleichendem Druckverlust bei längerfristigem Abstellen des Fahrzeugzuges sich die Bremsen des Anhängers lösen könnten. Auch in diesem Fall muss nämlich sichergestellt werden können, dass der Fahrzeugzug nicht wegrollt, was demzufolge von der Feststellbremse des Zugfahrzeuges bewirkt werden muss.

Das Ventil 206 ist als elektromagnetisch betätigbares 3/2-Wege-Magnetventil ausgeführt, das zur Betätigung über eine (nicht dargestellte) elektrische Leitung mit der elektronischen Steuereinheit verbunden ist. In einer ersten, in Fig. 7 dargestellten Schaltstellung verbindet das Ventil 206 die zum Anhängersteuerventil 208 führende Druckluftleitung 210 mit dem Ausgang des Relaisventils 64. In seiner zweiten Schaltstellung verbindet das Ventil 206 die Druckluftleitung 210 mit dem Druckluftvorrat des Druckluftvorratbehälters 188. In dieser zweiten Schaltstellung ist die Anhängerkontroll-Funktion aktiviert. Hierbei wird der Eingang des Anhängersteuerventils 208 mit dem Vorratsdruck beaufschlagt, was aufgrund einer invertierenden Funktion des Anhängersteuerventils 208 ein Lösen der Bremsen des Anhängers bewirkt.

Bei dem in Fig. 7 gezeigten Ausführungsbeispiel ist die elektrische Steuereinheit wiederum im Deckel 114 angeordnet.

Fig. 8 zeigt demgegenüber ein weiteres Ausführungsbeispiel einer Feststellbremsventileinheit 14""", das weitgehend dem in Fig. 7 gezeigten Ausführungsbeispiel entspricht, wobei jedoch die elektrische Steuereinheit 40 außerhalb des Deckels 114 angeordnet ist. Die elektrische Steuereinheit 40 ist wiederum vorzugsweise in der Steuereinheit des Antiblockiersystems untergebracht.

Mittels der Fig. 1 bis 4 einerseits und der Fig. 5 bis 8 andererseits wurde gezeigt, wie aufgrund unterschiedlicher rechtlicher und technischer Vorschriften unterschiedliche Ventilkonzepte für den nordamerikanischen Markt und den europäischen Markt vorgeschlagen werden. Ein Aspekt der Erfindung zielt darauf ab, diese unterschiedlichen Konzepte zu vereinheitlichen, so dass ein einheitliches Ventilkonzept für eine elektropneumatische Feststellbremse sowohl für Fahrzeuge des nordamerikanischen als auch des europäischen Marktes mit und ohne Anhänger bereitgestellt werden kann. Der Ventilblock der Feststellbremsventileinheit wird daher erfindungsgemäß derart ausgestaltet, dass er mit einem oder zwei Vorratsanschlüssen ausgerüstet ist. Während für den europäischen Markt nur ein Vorratsanschluss für Kreis III verwendet wird, werden für den nordamerikanischen Markt zwei Vorratsanschlüsse, nämlich die Kreise I und II angeschlossen. Diese sind vorzugsweise mittels Rückschlagventilen gegeneinander abgesichert.

Im Deckel der Feststellbremsventileinheit sind mehrere Einbauplätze für Drucksensoren bereitgestellt. Je nach Konfiguration und Bestückung der Einbauplätze mit Drucksensoren kann daher jeder Vorratsdruck einzeln, der höhere der beiden Vorratsdrücke hinter den Rückschlagventilen und/oder der Druck hinter dem bzw. den Relaisventilen sensiert werden.

Ferner sind im Ventilblock mehrere Einbauplätze für Spulen für Magnetventile vorgesehen. Ein erster Spulenplatz soll sowohl für den europäischen als auch für den amerikanischen Markt zur Steuerung eines Steuerventils die Feststellbremse des Fahrzeugs betätigen.

Die zweite Spule ist bei den Ausführungsformen für den europäischen Markt für eine Anhängerkontrollfunktion vorgesehen. In der Ausführungsform für den amerikanischen Markt ist die zweite Spule hingegen für den Anhänger bereitgestellt.

Sofern die Feststellbremsventileinheit in Fahrzeugen ohne Anhänger betrieben wird, bleibt der Einbauplatz für die zweite Spule unbestückt.

Der auf dem Ventilblock montierbare Deckel der Feststellbremsventileinheit kann je nach Bedarf eine eigenständige elektrische Steuereinheit mit Drucksensoren aufweisen. Alternativ weist der Deckel jedoch lediglich einen oder mehrere Drucksensoren auf, die mit einer externen elektrischen Steuereinheit kommunizieren. Der Deckel ist daher ebenfalls mit einer Mehrzahl von Einbauplätzen für Drucksensoren sowie mit einem Einbauplatz für eine elektrische Steuereinheit ausgestattet.

Aufgrund der besonderen erfindungsgemäßen Ausgestaltung der Feststellbremsventileinheit, insbesondere des Ventilblocks und des Deckels, kann die gleiche Feststellbremsventileinheit, d.h. insbesondere der gleiche Ventilblock und der gleiche Deckel sowohl für Fahrzeuge für den nordamerikanischen als auch den europäischen Markt verwendet werden und zwar unabhängig davon, ob das Fahrzeug mit oder ohne Anhänger betreibbar sein soll.

Die Erfindung ermöglicht somit ein Ventilkonzept, das universell für unterschiedliche Bremsanlagen, unterschiedliche Märkte mit unterschiedlichen rechtlichen Bestimmung und unterschiedlichen Fahrzeugkonfigurationen benutzt werden kann. Somit können die entsprechenden Bauteile, insbesondere der Ventilblock und der Deckel in verschiedenen Systemen genutzt werden. Hierdurch erreicht man eine Kosteneinsparung, da lediglich jeweils ein und dasselbe Bauteil für die unterschiedlichen Märkte und die unterschiedlichen Fahrzeugkonfigurationen bereitgehalten werden muss. Dies gewährleistet eine kosteneffiziente Umsetzung einer elektropneumatischen Feststellbremse.

## Patentansprüche

1. Ventileinheit für eine elektropneumatische Bremssteuerungseinrichtung zur Steuerung einer Feststellbremse eines Fahrzeugs, wobei die Ventileinheit (14) wenigstens eine luftmengenverstärkende Ventileinrichtung (64) zum Be- und Entlüften wenigstens eines Federspeicherbremszylinders (12) der Feststellbremse und wenigstens ein elektrisch betätigbares Steuerventil (86) zur Steuerung der luftmengenverstärkenden Ventileinrichtung (64) aufweist, **dadurch gekennzeichnet, dass** die luftmengenverstärkende Ventileinrichtung (64) sowie das wenigstens eine Steuerventil (86) in einem aus einem einheitlichen Metallblock oder Kunststoffblock mit Ausnehmungen für die luftmengenverstärkende Ventileinrichtung (64) und das bzw. die Steuerventile (86) gefertigten gemeinsamen einheitlichen Ventilblock (112) integriert sind, wobei der Ventilblock (112) mit den Ausnehmungen Führungen für bewegliche Teile der luftmengenverstärkenden Ventileinrichtung (64) bzw. des/der Steuerventile (86) bildet.

2. Ventileinheit nach Anspruch 1, **dadurch gekennzeichnet, dass** der Ventilblock einen oder mehrere Einbauplätze für darin anordbare Drucksensoren (116, 190, 194, 196) aufweist.

3. Ventileinheit nach Anspruch 2, **dadurch gekennzeichnet, dass** wenigstens ein Drucksensor (116) in einem im Ventilblock (112) vorgesehenen Druckluftkanal angeordnet ist, der mit einem oder mehreren Druckluftspeichern (18, 20) verbindbar ist.

4. Ventileinheit nach einem der vorhergehenden Ansprüche, **dadurch gekennzeichnet, dass** die Ventileinheit (14) mit einer elektrischen Steuerungseinrichtung (40) verbunden ist, mittels der das Steuerventil (86) steuerbar betätigbar ist, und die elektrische Steuerungseinrichtung (40) mit einer elektrischen Betätigungseinrichtung (186) verbunden ist, wobei die Betätigungseinrichtung (186) wenigstens einen elektrischen Schalter mit einer Löseposition und einer Einlegeposition und ggf. einer Neutralposition aufweist zum Lösen bzw. Einlegen der Feststellbremse.

5. Ventileinheit nach Anspruch 4, **dadurch gekennzeichnet, dass** die Steuerungseinrichtung in einer räumlich von der Ventileinheit (14) getrennt angeordneten Einheit (40) zur Steuerung eines Antiblockiersystems integriert ist.

6. Ventileinheit nach Anspruch 5, **dadurch gekennzeichnet, dass** die Steuerungseinrichtung in der Ventileinheit (14), insbesondere in einem Deckel (114) der Ventileinheit (14), angeordnet ist.

7. Ventileinheit nach einem der Ansprüche 4 bis 6, **dadurch gekennzeichnet, dass** die Betätigungseinrichtung (186) einen Schalter zur Aktivierung einer Streckbremsfunktion aufweist.

8. Ventileinheit nach einem der vorhergehenden Ansprüche, **dadurch gekennzeichnet, dass** der Ventilblock (112) wenigstens zwei Einbauplätze für Magnetspulen von Steuerventilen (86, 110) aufweist.

9. Ventileinheit nach Anspruch 8, **dadurch gekennzeichnet, dass** ein erster Einbauplatz für eine erste Magnetspule eines elektrisch betätigbaren Steuerventils (86) vorgesehen ist, mittels dessen die Feststellbremse eines Zugfahrzeugs betätigbar ist.

10. Ventileinheit nach Anspruch 8 oder 9, **dadurch gekennzeichnet, dass** ein zweiter Einbauplatz für eine zweite Magnetspule eines elektrisch betätigbaren Steuerventils (110) vorgesehen ist, mittels dessen die Feststellbremse eines Anhängerfahrzeugs betätigbar ist.

11. Ventileinheit nach einem der Ansprüche 8 bis 10, **dadurch gekennzeichnet, dass** der zweite Einbauplatz für die zweite Magnetspule unbestückt ist.

12. Ventileinheit nach einem der Ansprüche 8 bis 11, **dadurch gekennzeichnet, dass** der Ventilblock (112) einen oder mehrere Anschlüsse (98, 100) aufweist, die über Druckluftleitungen (71, 75) mit einem oder mehreren Druckluftspeichern (18, 20; 188) verbindbar sind.

13. Ventileinheit nach Anspruch 12, **dadurch gekennzeichnet, dass** wenigstens einer von mehreren Anschlüssen (98, 100) für Druckluftleitungen (71, 75) zu Druckluftspeichern (18, 20; 188) verschlossen ist.

14. Ventileinheit nach einem der vorhergehenden Ansprüche, **dadurch gekennzeichnet, dass** wenigstens ein Drucksensor (190) in einem im Ventilblock (112) vorgesehenen Druckluftkanal angeordnet ist, der von dem Ausgang der luftmengenverstärkenden Ventileinrichtung (64) in Richtung des Federspeicherbremszylinders (12) führt.

## Claims

1. Valve unit for an electro-pneumatic brake control device for controlling a parking brake of a vehicle, wherein the valve unit (14) has at least one air-quantity-boosting valve device (64) for ventilating and venting at least one spring-loaded brake cylinder (12) of the parking brake and at least one electrically activated control valve (86) for controlling the air-quantity-boosting valve device (64), **characterized in that** the air-quantity-boosting valve device (64) and the at least one control valve (86) are integrated into a common uniform valve block (112) which is manufactured from a uniform metal block or plastic block having cutouts for the air-quantity-boosting valve device (64) and the control valve(s) (86), wherein the valve block (112), with the cutouts, forms guides for movable parts of the air-quantity-boosting valve device (64) and of the control valve(s) (86).

2. Valve unit according to Claim 1, **characterized in that** the valve block has one or more installation locations for pressure sensors (116, 190, 194, 196) which can be arranged therein.

3. Valve unit according to Claim 2, **characterized in that** at least one pressure sensor (116) is arranged in a compressed air duct which is provided in the valve block (112) and which can be connected to one or more compressed air accumulators (18, 20).

4. Valve unit according to one of the preceding claims, **characterized in that** the valve unit (14) is connected to an electric control device (40) by means of which the control valve (86) can be activated in a controllable fashion, and the electric control device (40) is connected to an electric activation device (186), wherein the activation device (186) has at least one electric switch with a release position and an engagement position and, if appropriate, a neutral position, for releasing or engaging the parking brake.

5. Valve unit according to Claim 4, **characterized in that** the control device is integrated into a unit (40) which is arranged spatially separate from the valve unit (14) and has the purpose of controlling an anti-lock brake system.

6. Valve unit according to Claim 5, **characterized in that** the control device is arranged in the valve unit (14), in particular in a cover (114) of the valve unit (14).

7. Valve unit according to one of Claims 4 to 6, **characterized in that** the activation device (186) has a switch for actuating an anti-jackknifing brake function.

8. Valve unit according to one of the preceding claims, **characterized in that** the valve block (112) has at least two installation locations for solenoids of control valves (86, 110).

9. Valve unit according to Claim 8, **characterized in that** a first installation location is provided for a first solenoid of an electrically activated control valve (86), by means of which control valve (86) the parking brake of a tractor vehicle can be activated.

10. Valve unit according to Claim 8 or 9, **characterized in that** a second installation location is provided for a second solenoid of an electrically activated control valve (110), by means of which control valve (110) the parking brake of a trailer vehicle can be activated.

11. Valve unit according to one of Claims 8 to 10, **characterized in that** the second installation location for the second solenoid is not equipped.

12. Valve unit according to one of Claims 8 to 11, **characterized in that** the valve block (112) has one or more ports (98, 100) which can be connected to one or more compressed air accumulators (18, 20; 188) via compressed air lines (71, 75).

13. Valve unit according to Claim 12, **characterized in that** at least one of a plurality of ports (98, 100) for compressed air lines (71, 75) leading to compressed air accumulators (18, 20; 188) is closed off.

14. Valve unit according to one of the preceding claims, **characterized in that** at least one pressure sensor (190) is arranged in a compressed air duct which is provided in the valve block (112) and leads from the outlet of the air-quantity-boosting valve device (64) in the direction of the spring-loaded brake cylinder (12).

## Revendications

1. Unité de soupape pour un dispositif de commande de freinage électropneumatique pour la commande d'un frein de stationnement d'un véhicule, dans laquelle l'unité de soupape (14) présente au moins un dispositif de soupape augmentant le débit d'air (64) pour l'arrivée et l'évacuation d'air d'au moins un cylindre de frein à ressort (12) du frein de stationnement et au moins une soupape de commande à actionnement électrique (86) pour la commande du dispositif de soupape augmentant le débit d'air (64), **caractérisée en ce que** le dispositif de soupape augmentant le débit d'air (64) ainsi que ladite au moins une soupape de commande (86) sont intégrés dans un bloc de soupape unitaire commun (112) fabriqué à partir d'un bloc de métal ou d'un bloc de matière plastique unitaire avec des évidements pour le dispositif de soupape augmentant le débit d'air (64) ou la ou les soupapes de commande (86), dans laquelle le bloc de soupape (112) forme avec les évidements des guidages pour des parties mobiles du dispositif de soupape augmentant le débit d'air (64) ou de la/des soupapes de commande (86).

2. Unité de soupape selon la revendication 1, **caractérisée en ce que** le bloc de soupape présente un ou plusieurs emplacement(s) de montage pour des capteurs de pression (116, 190, 194, 196) pouvant être disposés dans celle-ci.

3. Unité de soupape selon la revendication 2, **caractérisée en ce qu'**au moins un capteur de pression (116) est disposé dans un canal d'air comprimé prévu dans le bloc de soupape (112), qui peut être raccordé à un ou plusieurs réservoir(s) d'air comprimé (18, 20).

4. Unité de soupape selon l'une quelconque des revendications précédentes, **caractérisé en ce que** l'unité de soupape (14) est reliée à un dispositif de commande électrique (40), au moyen duquel la soupape de commande (86) peut être actionnée de façon réglable, et le dispositif de commande électrique (40) est relié à un dispositif d'actionnement électrique (186), dans laquelle le dispositif d'actionnement (186) présente au moins un interrupteur électrique avec une position de libération et une position d'engagement et éventuellement une position neutre pour libérer ou engager le frein de stationnement.

5. Unité de soupape selon la revendication 4, **caractérisée en ce que** le dispositif de commande est intégré dans une unité (40) disposée de façon spatialement séparée de l'unité de soupape (14) pour la commande d'un système d'antiblocage.

6. Unité de soupape selon la revendication 5, **caractérisée en ce que** le dispositif de commande est disposé dans l'unité de soupape (14), en particulier dans un couvercle (114) de l'unité de soupape (14).

7. Unité de soupape selon l'une quelconque des revendications 4 à 6, **caractérisée en ce que** le dispositif d'actionnement (186) présente un interrupteur pour l'activation d'une fonction de résistance à l'étirement.

8. Unité de soupape selon l'une quelconque des revendications précédentes, **caractérisée en ce que** le bloc de soupape (112) présente au moins deux emplacements de montage pour des bobines magnétiques de soupapes de commande (86, 110).

9. Unité de soupape selon la revendication 8, **caractérisée en ce qu'**il est prévu un premier emplacement de montage pour une première bobine magnétique d'une soupape de commande à actionnement électrique (86), au moyen de laquelle le frein de stationnement d'un véhicule de traction peut être actionné.

10. Unité de soupape selon la revendication 8 ou 9, **caractérisée en ce qu'**il est prévu un deuxième emplacement de montage pour une deuxième bobine magnétique d'une soupape de commande à actionnement électrique (110), au moyen de laquelle le frein de stationnement d'une remorque peut être actionné.

11. Unité de soupape selon l'une quelconque des revendications 8 à 10, **caractérisée en ce que** le deuxième emplacement de montage pour la deuxième bobine magnétique est inoccupé.

12. Unité de soupape selon l'une quelconque des revendications 8 à 11, **caractérisée en ce que** le bloc de soupape (112) présente un ou plusieurs raccord(s) (98, 100), qui peut/peuvent être raccordé(s) par des conduites d'air comprimé (71, 75) à un ou plusieurs réservoir(s) d'air comprimé (18, 20; 188).

13. Unité de soupape selon la revendication 12, **caractérisée en ce qu'**au moins un de plusieurs raccords (98, 100) pour des conduites d'air comprimé (71, 75) vers des réservoirs d'air comprimé (18, 20; 188) est fermé.

14. Unité de soupape selon l'une quelconque des revendications précédentes, **caractérisée en ce qu'**au moins un capteur de pression (190) est disposé dans un canal d'air comprimé prévu dans le bloc de soupape (112), qui conduit de la sortie du dispositif de soupape augmentant le débit d'air (64) en direction du cylindre de frein à ressort (12).
